# EUROPÄISCHE PATENTSCHRIFT

(11) **EP 1 186 456 B1**
(45) Veröffentlichungstag und Bekanntmachung des Hinweises auf die Patenterteilung: **22.02.2006**
(21) Anmeldenummer: 01121212.3
(22) Anmeldetag: 05.09.2001
(51) Int. Cl.: B60J 10/04, E05F 15/00

(54) **Schliesskantensicherung**
Securing device for a closing edge
Dispositif d'arrêt pour arête de fermeture

(30) Priorität: 05.09.2000 DE 20015330 U
(43) Veröffentlichungstag der Anmeldung: 13.03.2002
(73) Patentinhaber: Mayser GmbH & Co., D-89073 Ulm (DE)
(72) Erfinder: Scherraus, Marc, 89075 Ulm (DE); Schurr, Guido, 89155 Erbach (DE)
(74) Vertreter: Patentanwälte Ruff, Wilhelm, Beier, Dauster & Partner

(56) Entgegenhaltungen:
- EP-A- 1 026 353
- DE-A- 19 602 744
- DE-A- 19 825 297

## Beschreibung

Die Erfindung betrifft eine Schließkantensicherung für ein bewegliches Schließteil an einem Kraftfahrzeug mit einem elastischen Hohlprofil, das längs eines Randbereiches eines durch das Schließteil verschließbaren Ausschnittes angeordnet ist, und das wenigstens eine Hohlkammer zur Aufnahme einer längserstreckten Sensoreinrichtung für einen aktiven Sicherungsbereich des Hohlprofils aufweist, wobei die Länge des aktiven Sicherungsbereiches für das Schließteil geringer ist als die Länge des Hohlprofils.

Aus der DE 43 28 167 C2 ist eine Schließkantensicherung für eine elektromotorisch bewegliche Seitenscheibe eines Kraftfahrzeugs bekannt, bei der in einem Scheibendichtprofil eine Hohlkammer vorgesehen ist, in die eine elektrische Kontaktstreifenanordnung eingezogen ist. Bei dieser Schließkantensicherung entspricht die Länge der Kontaktstreifenanordnung, d.h. der Sensoreinrichtung, der Länge des Scheibendichtprofils.

Aufgabe der Erfindung ist es, eine Schließkantensicherung der eingangs genannten Art zu schaffen, die mit reduziertem Aufwand eine sichere Funktion aufweist.

Diese Aufgabe wird dadurch gelöst, daß die längserstreckte Sensoreinrichtung auf die Länge des aktiven Sicherungsbereiches abgestimmt ist, und daß mit einem Ende der längserstreckten Sensoreinrichtung ein inaktives Zugstück permanent verbunden ist, das in der Hohlkammer des Hohlprofils verläuft und eine Länge aufweist, die etwa der Länge des Hohlkammerabschnittes zwischen dem Ende des aktiven Sicherungsbereiches und dem stirnseitigen Ende des Hohlprofiles auf der mit dem inaktiven Zugstück versehenen Seite entspricht. Die erfindungsgemäße Lösung geht von der Erkenntnis aus, daß eine sichere Funktion der Schließkantensicherung auch dadurch gewährleistet ist, daß sich die Sensoreinrichtung lediglich über die Länge des aktiven Sicherungsbereiches erstreckt. Dadurch kann die Sensoreinrichtung gegenüber einer aus dem Stand der Technik bekannten Sensoreinrichtung eine reduzierte Länge aufweisen, wodurch der Kostenaufwand gegenüber einer bekannten Schließkantensicherung erheblich reduziert wird. Problematisch bei Sensoreinrichtungen mit gegenüber der Länge des Hohlprofils reduzierter Länge ist es, zum einen die längserstreckte Sensoreinrichtung zuverlässig in das Hohlprofil einziehen zu können, und zum anderen, gewährleisten zu können, daß die Sensoreinrichtung innerhalb des Hohlprofiles tatsächlich so ausgerichtet ist, daß sie sich über die gesamte Länge des aktiven Sicherungsbereiches erstreckt. Diese bei der Entwicklung der Erfindung aufgetretenen Probleme sind durch das Vorsehen des inaktiven Zugstückes und die erfindungsgemäße Längendimensionierung des Zugstückes gelöst worden. Das inaktive Zugstück hat den Vorteil, daß es als einfaches Zugelement ohne sensorische oder elektrische Eigenschaften ausgeführt werden kann. So kann das Zugstück insbesondere ein einfaches Band, ein Faden oder ähnliches sein. Ursprünglich war auch die Idee verfolgt worden, lösbare Zugelemente während des Einziehvorganges der Sensoreinrichtung vorübergehend mit dem entsprechenden Stimende der Sensoreinrichtung zu verbinden und anschließend wieder zu entfemen. Es hat sich aber gezeigt, daß ein Lösen des Zugstückes nach korrekter Positionierung der Sensoreinrichtung innerhalb des Hohlprofiles nur mit äußerst hohem Aufwand und nicht mit absoluter Sicherheit möglich war. Die erfindungsgemäße Längendimensionierung des inaktiven Zugstückes ermöglicht in äußerst einfacher Weise beim Einziehvorgang eine Überwachung, ob die Sensoreinrichtung bereits richtig positioniert ist oder nicht. Denn sobald das zugseitige Stirnende des Zugstückes das korrespondierende Stimende des Hohlprofiles erreicht hat, ist sichergestellt, daß die Sensoreinrichtung korrekt positioniert ist. Zusätzliche Überwachungs- oder Prüfmaßnahmen entfallen hierdurch. Eine zuverlässige und sichere Funktion der Schließkantensicherung ist gewährleistet. Die erfindungsgemäße Lösung eignet sich insbesondere für Schließkantensicherungen an Seitenscheiben von Kraftfahrzeugen. In gleicher Weise ist die Schließkantensicherung auch für Schiebedächer, Türen, Klappen oder Motorhauben einsetzbar. In allen Fällen erfolgt ein Schließen der entsprechenden Schließteile durch einen Antrieb, insbesondere einen elektromotorischen Antrieb. Durch die Schließkantensicherung wird verhindert, daß das Schließteil in seine geschlossene Position überführt wird, wenn sich ein Gegenstand in dem Freiraum zwischen der entsprechenden Stirnkante des Schließteiles und dem umgebenden Karosserieausschnitt des Kraftfahrzeugs befindet.

In Ausgestaltung der Erfindung ragt das Zugstück mit einem Stimende aus dem stimseitigen Ende des Hohlprofiles heraus, und an dem Stirnende ist ein Befestigungsmittel vorgesehen. Das Zugstück ist somit geringfügig länger als die Länge des Hohlkammerabschnittes zwischen dem Ende des aktiven Sicherungsbereiches und dem rückseitigen Stimende des Hohlprofiles - in Einzugrichtung gesehen. Die Länge des Zugstückes entspricht aber immer noch in etwa der Länge dieses Hohlkammerabschnittes. Der geringfügige, über die Länge dieses Hohlkammerabschnittes hinausgehende Längenabschnitt des Zugstückes entspricht der Länge des Befestigungsmittels. Denn lediglich das Befestigungsmittel ragt über das stirnseitige Ende des Hohlprofiles hinaus. Als Befestigungsmittel kann ein separates Befestigungselement mit dem Zugstück verbunden sein. Es kann auch vorgesehen sein, in dem Stirnende des Zugstückes ein Befestigungsmittel einstückig zu integrieren. Ein bevorzugtes, integriertes Befestigungsmittel ist eine aus dem Material des Zugstückes gebildete Zugschlaufe. Durch das Befestigungsmittel ist es möglich, in Verbindung mit einem karosserieseitigen Befestigungselement das Zugstück und damit auch die Sensoreinrichtung in der korrekten Position zu fixieren. Eine Verschiebung der Sensoreinrichtung entgegen der Zugrichtung wird dadurch vermieden.

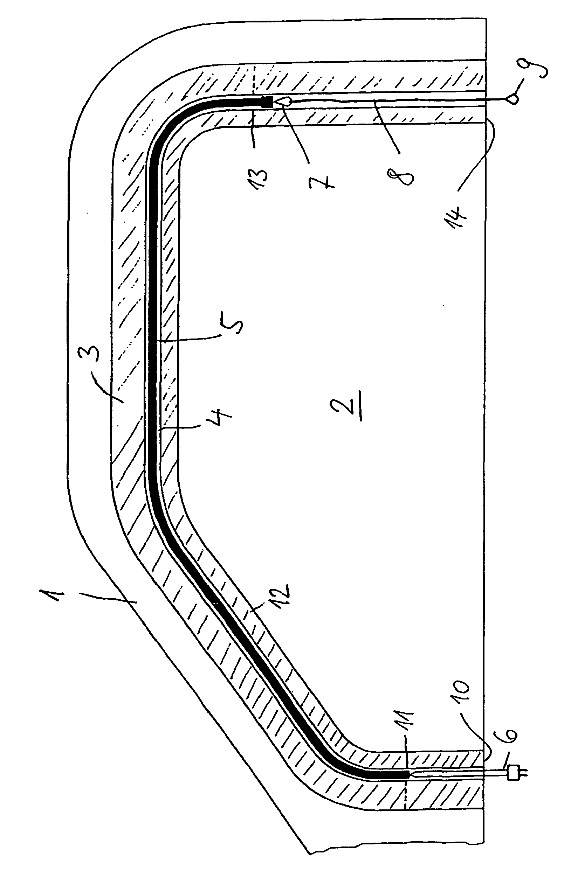

Weitere Vorteile und Merkmale der Erfindung ergeben sich aus den Ansprüchen sowie aus der nachfolgenden Beschreibung eines bevorzugten Ausführungsbeispiels der Erfindung, das anhand der einzigen Zeichnung dargestellt ist.

Die einzige Zeichnung zeigt schematisch in einer Schnittdarstellung eine Ausführungsform einer erfindungsgemäßen Schließkantensicherung im Randbereich eines Fensterausschnittes für eine Seitenscheibe eines Kraftfahrzeugs.

Eine lediglich teilweise dargestellte Seitentür 1 eines Personenkraftwagens weist einen Fensterausschnitt 2 auf, der durch eine nicht näher dargestellte, elektromotorisch bewegliche Seitenscheibe verschließbar ist. Der Randbereich des Fensterausschnittes 2 ist durch ein umlaufendes elastisches Hohlprofil 3 belegt, das an diesem Randbereich in grundsätzlich bekannter Weise angefügt ist und als Fensterführung dient. Das elastische Hohlprofil 3 weist eine über die gesamte Länge des elastischen Hohlprofiles 3 durchgängige Hohlkammer 4 auf, in die eine Sensoreinrichtung 5 eingezogen ist. Die Sensoreinrichtung 5 ist insbesondere gemäß einer Kontaktstreifenanordnung nach der DE 42 28 167 C2 gestaltet und weist eine Länge auf, die geringer ist als die gestreckte Länge der Hohlkammer und des Hohlprofiles 3. Das Hohlprofil 3 weist zur Schließkantensicherung in einem oberen Bereich des Fensterausschnittes 2, in dem der Randbereich des Fensterausschnittes wie auch die Führung des Hohlprofiles 3 von der vertikalen Ausrichtung abweicht, einen aktiven Sicherungsbereich 12 auf, der sich von der in der Zeichnung linken Anfangslinie 11 bis zu der in der Zeichnung rechten Endlinie 13 erstreckt. In diesem aktiven Sicherungsbereich 12 muss eine zuverlässige und sichere sowie durchgängige Funktion der Sensoreinrichtung 5 gewährleistet sein.

Dies könnte in einfacher Weise dadurch erzielt werden, dass sich auch die Sensoreinrichtung 5 über die gesamte Länge der Hohlkammer und des Hohlprofiles erstreckt. Um hier jedoch entsprechende, unnötige Teile der Sensoreinrichtung 5 vermeiden zu können, erstreckt sich vorliegend auch die Sensoreinrichtung 5 lediglich über die Länge dieses aktiven Sicherungsbereiches 12. Die Sensoreinrichtung 5 wird von einem vorderen Stirnende 10 des Hohlprofiles 3 her in die Hohlkammer 4 eingezogen, wobei ein entsprechendes Einzugwerkzeug von einem rückseitigen Stirnende 14 in das korrespondierende Stimende des Hohlprofiles 4 eingeführt und durch dieses Stirnende 14 allmählich nach unten herausgezogen wird. Stirnseitig an die - in Einzugrichtung gesehen - vordere Seite der Sensoreinrichtung 5 ist ein inaktives Zugstück 8 unlösbar angefügt, das über ein Koppelglied 7, beispielsweise in Form einer Zugschlaufe, fest mit dem vorderen Stirnende der Sensoreinrichtung 5 verbunden ist. Die Länge des inaktiven Zugstückes 8 entspricht entweder identisch oder in einem Toleranzbereich von +5 bis +15mm der Länge des Hohlkammerabschnittes zwischen der Endlinie 13 und dem rückseitigen Stimende 14 des Hohlprofiles 3. An einem - in Einzugrichtung gesehen - vorderen Stimende weist das inaktive Zugstück 8 eine Zugöse oder Zugschlaufe 9 auf, um den Angriff des Einzugwerkzeugs zu ermöglichen. Die Sensoreinrichtung 5 wird somit in einfacher Weise so weit in die Hohlkammer 4 des Hohlprofiles 3 eingezogen, bis die vordere Zugschlaufe 9 des inaktiven Zugstückes 8 um einen geringen Betrag aus dem rückseitigen Stimende 14 des Hohlprofiles 3 bzw. der Hohlkammer 4 herausragt. Da die Länge des inaktiven Zugstückes 8 auf die Länge des inaktiven Hohlkammerabschnittes zwischen der Endlinie 13 und dem Stirnende 14 abgestimmt ist, ist durch das Erreichen des rückseitigen Stirnendes 14 Zugschlaufe 9 gewährleistet, dass sich auch die Sensoreinrichtung 5 richtig positioniert im Sicherungsbereich 12 befindet. In Einzugrichtung rückseitig ragen Anschlusskabel 6 zu dem vorderen Stimende 10 des Hohlprofiles nach unten heraus, um die elektrische Verbindung mit einer entsprechenden Schaltanordnung zu schaffen.

## Patentansprüche

1. Schließkantensicherung für ein bewegliches Schließteil an einem Kraftfahrzeug mit einem elastischen Hohlprofil, das längs eines Randbereiches eines durch das Schließteil verschließbaren Ausschnittes angeordnet ist, und das wenigstens eine Hohlkammer zur Aufnahme einer längserstreckten Sensoreinrichtung für einen aktiven Sicherungsbereich des Hohlprofiles aufweist, wobei die Länge des aktiven Sicherungsbereiches für das Schließteil geringer ist als die Länge des Hohlprofiles, **dadurch gekennzeichnet, daß** die längserstreckte Sensoreinrichtung (5) auf die Länge des aktiven Sicherungsbereiches (12) abgestimmt ist, und daß mit einem Ende der längserstreckten Sensoreinrichtung (5) ein inaktives Zugstück (8) permanent verbunden ist, das in der Hohlkammer (4) des Hohlprofiles (3) verläuft und eine Länge aufweist, die etwa der Länge des Hohlkammerabschnittes zwischen dem Ende (13) des aktiven Sicherungsbereiches (12) und dem stimseitigen Ende (14) des Hohlprofiles (3) auf der mit dem inaktiven Zugstück (8) versehenen Seite entspricht.

2. Schließkantensicherung nach Anspruch 1, **dadurch gekennzeichnet, daß** das Zugstück (8) mit einem Stimende aus dem stirnseitigen Ende (14) des Hohlprofiles (3) herausragt, und daß an dem Stirnende ein Befestigungsmittel vorgesehen ist.

3. Schießkantensicherung nach Anspruch 2, **dadurch gekennzeichnet, daß** als Befestigungsmittel eine Zugschlaufe (9) vorgesehen ist.

## Claims

1. Closing edge securing device for a movable closing part on a motor vehicle with an elastic hollow section arranged along an edge area of a cutout closable by said closing part and having at least one hollow chamber for receiving a longitudinally extending sensor device for an active securing area of the hollow section, the length of said active securing area for the closing part being less than the length of the hollow section, **characterized in that** the longitudinally extending sensor device (5) is matched to the length of the active securing area (12) and **in that** one end of the longitudinally extending sensor device (5) is permanently connected to an inactive puller (8) running inside the hollow chamber (4) of the hollow section (3) and having a length approximately corresponding to the length of the hollow chamber part between the end (13) of the active securing area (12) and the end face (14) of the hollow section (3) on that side provided with the inactive puller (B).

2. Closing edge securing device according to Claim 1, **characterized in that** the puller (B) protrudes with one end from the end face (14) of the hollow section (3), and **in that** a fastening means is provided at said end.

3. Closing edge securing device according to Claim 2, **characterized in that** a puller loop (9) is provided as the fastening means.

## Revendications

1. Dispositif d'arrêt pour arête de fermeture pour un élément de fermeture mobile dans un véhicule automobile, avec un profilé creux élastique qui est disposé le long d'une zone marginale d'une section pouvant être fermée par l'élément de fermeture, et qui présente au moins une cavité destinée à loger un dispositif détecteur allongé pour une zone d'arrêt active du profité creux, la longueur de la zone d'arrêt active pour l'élément de fermeture étant inférieure à la longueur du profilé creux,
**caractérisé en ce que** le dispositif détecteur allongé (5) est ajusté sur la longueur de la zone d'arrêt active (12), et qu'un élément de traction inactif (8) est relié en permanence à une extrémité du dispositif détecteur (5), s'étend dans la cavité (4) du profilé creux (3) et a une longueur correspondant approximativement à la longueur de la section de la cavité comprise entre l'extrémité (13) de la zone d'arrêt active (12) et l'extrémité frontale (14) du profilé creux (3) du côté muni de l'élément de traction inactif (8).

2. Dispositif d'arrêt pour arête de fermeture selon la revendication 1, **caractérisé en ce qu'**une extrémité frontale de l'élément de traction (8) dépasse de l'extrémité frontale (14) du profilé creux (3), et qu'un moyen de fixation est prévu à l'extrémité frontale.

3. Dispositif d'arrêt pour arête de fermeture selon la revendication 2, **caractérisé en ce qu'**une boucle de traction (9) est prévue comme moyen de fixation.
